# EUROPEAN PATENT APPLICATION

(11) **EP 2 248 422 A1**
(43) Date of publication of application: **10.11.2010**
(21) Application number: 09159726.0
(22) Date of filing: 08.05.2009
(51) Int. Cl.: A01N 43/22, A01N 43/42, A01P 7/00

(54) **Ectoparasiticidal compositions**

(71) Applicant: Novartis AG, 4056 Basel (CH)
(72) Inventor: Kempter, Christoph, 4125 Riehen (CH); Roos, Ulrich, 79540 Lörrach (DE); Blaser, David, 4051 Basel (CH); Epe, Christian, 3275 Merzligen (CH)
(74) Representative: Liphardt, Bernd

(57) **Abstract**

The invention relates to a composition for controlling ectoparasites in and on animals, which comprises a combination of
(i) the dihydroquinolinone (DHQ) compound of formula 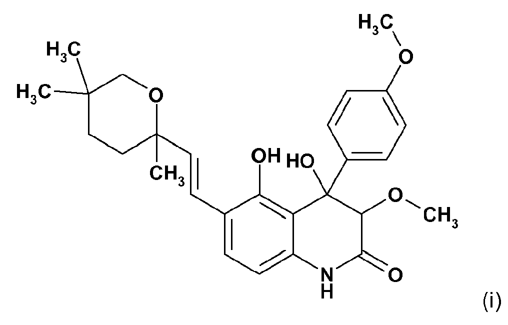 and
(ii) a spinosyn.

The compositions are useful in the control of parasites, in particular ectoparasites, in and on warm-blooded animals.

## Description

The present invention relates to novel ectoparasiticidal compositions and their use in the control of ectoparasites, in particular insects and acari, in and on animals.

Insect and mite pests such as fleas, lice, mosquitos, mites, ticks and certain fly species can severely attack and annoy humans and animals and also affect humans and animals by transmitting disease. It is therefore a major goal to control insect and mite pests on animals in ways that protect the environment and, at the same time, are effective in combating a wide spectrum of pests. While quite a number of active compounds have been identified and developed as pesticides, many of them have only a narrow range of pest control thus requiring the application of multiple compositions and/or may be harmful to the animal or environment. For example, spinosyns such as spinosad are known to be effective in the control of lice, mosquitos and especially fleas, but do not provide sufficient activity, for example, against ticks. Accordingly, there remains the need for an improved composition to treat insect and mite pests on animals which covers the full spectrum of animal ectoparasites and is safe for animals and environmentally harmless.

It now has been found surprisingly, that a combination of two naturally occuring insecticides provides a complete protection of animals against ectoparasites while being environmentally extremely safe and harmless for the animals.

The present invention therefore in one aspect relates to a composition for controlling ectoparasites in and on animals, which comprises a combination, in variable proportions, of (i) the dihydroquinolinone (DHQ) compound of formula 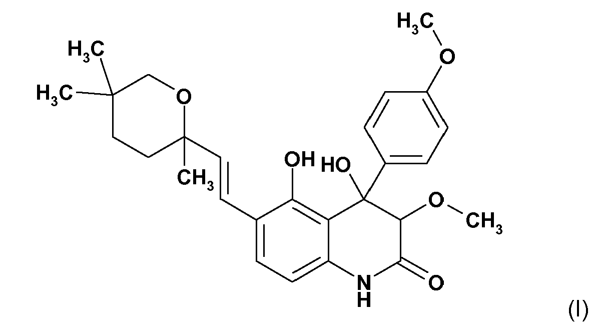 and
(ii) a spinosyn.

Certain dihydroquinolinone (DHQ) derivatives and their growth inhibition activity against anthropods selected from the group consisting of centipedes, mites, spiders, crabs and shrimps are known from WO 2006/59400. Besides said growth inhibition activity, no other insecticidal activity, and especially no killing activity concerning fleas and ticks - fleas and ticks are not controlled by growth inhibition but by direct killing - has been reported or proposed.

The compound can be prepared in accordance with the preparation processes described in the literature. Certain Dihydroquinolinone derivatives were isolated from the culture broth of *Penicillium* sp. FKI-2140 (Ryuji Uchida et al., 'Yaequinolones, New Insecticidal Antibiotics Produced by Penicillium sp. FKI-2140', J. Antibiot. 59(10): 646-658 (2006); and WO2006/059400) or by the fungus *Penicillium* cf. *simplicissimum* (Miyako Kusano et al., 'Nematicidal Alkaloides and Related Compounds Produced by the Fungus Penicillium cf. simplicissimum. Biosci. Biotechnol. Biochem., 64 (12), 2559-2568 (2000)). Others were produced by the fungus *Aspergillus nidulans* (DE102006006893).

Formula (I) above is meant to comprise the compound in free form or salt form and all stereoisomers thereof.

Salts of the compound of the formula (I) may be produced in known manner. Acid addition salts, for example, are obtainable from the compound (I) by treating with a suitable acid or a suitable ion exchange reagent, and salts with bases are obtainable by treating with a suitable base or a suitable ion exchange reagent.

Salts of the compound of the formula (I) can be converted into the free compound (I) by the usual means, acid addition salts e.g. by treating with a suitable basic composition or with a suitable ion exchange reagent, and salts with bases e.g. by treating with a suitable acid or a suitable ion exchange reagent.

Salts of the compound of the formula (I) can be converted into other salts of the compound (I) in a known manner; acid addition salts can be converted for example into other acid addition salts, e.g. by treating a salt of an inorganic acid, such as a hydrochloride, with a suitable metal salt, such as a sodium, barium, or silver salt, of an acid, e.g. with silver acetate, in a suitable solvent, in which a resulting inorganic salt, e.g. silver chloride, is insoluble and thus precipitates out from the reaction mixture.

Depending on the method and/or reaction conditions, the compound of the formula (I) with salt-forming characteristics can be obtained in free form or in the form of salts.

The compound of the formula (I) contains several asymmetric carbon atoms or stereo centers. Consequently, the compound of the formula (I) may be optionally present as optical and/or geometric isomer or as a mixture thereof. The invention relates both to the pure isomers and to all possible isomeric mixtures, and is hereinbefore and hereinafter understood as doing so, even if stereochemical details are not specifically mentioned.

Diastereoisomeric mixtures of the compound of the formula (I), which are obtainable, may be separated in known manner, on the basis of the physical-chemical differences in their components, into the pure diastereoisomers, for example by fractional crystallization, distillation and/or chromatography.

Splitting of mixtures of enantiomers, that are obtainable accordingly, into the pure isomers, may be achieved by known methods, for example by recrystallization from an optically active solvent, by chromatography on chiral adsorbents, e.g. high-pressure liquid chromatography (HPLC) on acetyl cellulose, with the assistance of appropriate microorganisms, by cleavage with specific immobilized enzymes, through the formation of inclusion compounds, e.g. using chiral crown ethers, whereby only one enantiomer is complexed.

According to the invention, apart from separation of corresponding isomer mixtures, generally known methods of diastereoselective or enantioselective synthesis can also be applied to obtain pure diastereoisomers or enantiomers, e.g. by carrying out the method of the invention using educts with correspondingly suitable stereochemistry.

It is advantageous to isolate or synthesize the biologically more active isomer, e.g. enantiomer, provided that the individual components have differing biological efficacy. Spinosyns, used as second ectoparasiticidal component of the compositions of the invention, are naturally derived fermentation products. Each spinosyn has a 12-membered macrocyclic ring that is part of an unusual tetracyclic ring system to which two different sugars are attached, the amino-sugar forosamine and the neutral sugar 2N,3N,4N-(tri-O-methyl)rhamnose. They are macrolides produced by cultivation of *Saccharopolyspora spinosa.* The fermentation produces many factors, for example spinosyns A to J with spinosyn A and spinosyn D (also called A83543A and A83543D) being the primary components. Spinosyn A and spinosyn D are also the two spinosyns that are most active as insecticides. A product comprised mainly of these two spinosyns is available under the name "spinosad". Additional spinosyns lettered from K to Y have been identified from mutant strains of S. *spinosa.* The various spinosyns are characterized by differences in the substitution pattern on the amino group of the forosamine, at selected sites on the tetracyclic ring system or on the 2N,3N,4N-(tri-O-methyl)rhamnose group.

The term spinosyn as used herein refers to an individual spinosyn factor (spinosyn A - Y), a demethyl derivative of an individual spinosyn or a combination of two or more individual spinosyns or derivatives thereof. A preferred spinosyn is a mixture of spinosyn A and spinosyn D and in particular spinosad.

The spinosyns can react to form salts that are also useful in the formulations and methods of the invention.The salts are prepared using standard methods for salt preparation. For example spinosyn A can be neutralized with an appropriate acid to form an acid addition salt.

The compositions of the present invention may comprise the compound of the formula (I) and the spinosyn in any suitable weight ratio, for example in a ratio between 1:100 and 100:1 weight by weight, preferably in a ratio between 10:1 and 1:10 weight by weight, and most preferably a ratio between 5:2 and 5:4 weight by weight.

Both the dihydroquinoline of formula (I) and the spinosyns have an excellent human and animal safety and toxicological profile.

The compositions comprising a combination of the compound of the formula (I) and a spinosyn are notable for their broad activity spectrum for use in pest control. They are particularly suitable in the control of ectoparasites and to a certain extent also for controlling endoparasites on and in animals and in the hygiene field, whilst being well tolerated by warm-blooded animals.

In the context of the present invention, ectoparasites are understood to be in particular insects, acari (mites and ticks), and crustaceans (sea lice). These include insects of the following orders: *Lepidoptera, Coleoptera, Homoptera, Hemiptera, Heteroptera, Diptera, Dictyoptera, Thysanoptera, Orthoptera, Anoplura, Siphonaptera, Mallophaga, Thysanura, Isoptera, Psocoptera* and *Hymenoptera.* However, the ectoparasites which may be mentioned in particular are those which trouble humans or animals and carry pathogens, for example flies such as *Musca domestica, Musca vetustissima, Musca autumnalis, Fannia canicularis, Sarcophaga carnaria, Lucilia cuprina, Lucilia sericata, Hypoderma bovis, Hypoderma lineatum, Chrysomyia chloropyga, Dermatobia hominis, Cochliomyia hominivorax, Gasterophilus intestinalis, Oestrus ovis,* biting flies such as *Haematobia irritans irritans, Haematobia irritans exigua, Stomoxys calcitrans,* horse-flies (Tabanids) with the subfamilies of Tabanidae such as *Haematopota spp. (e.g. Haematopota pluvialis)* and *Tabanus spp, (*e.g. *Tabanus nigrovittatus)* and *Chrysopsinae* such as *Chrysops spp. (e.g. Chrysops caecutiens);* Hippoboscids such as *Melophagus ovinus* (sheep ked); tsetse flies, such as *Glossinia spp,;* other biting insects like midges, such as *Ceratopogonidae* (biting midges), *Simuliidae* (Blackflies), *Psychodidae* (Sandflies); but also blood-sucking insects, for example mosquitoes, such as *Anopheles* spp, *Aedes* spp and *Culex* spp, fleas, such as *Ctenocephalides felis* and *Ctenocephalides canis* (cat and dog fleas), *Xenopsylla cheopis, Pulex irritans, Ceratophyllus gallinae, Dermatophilus penetrans,* blood-sucking lice (*Anoplura*) such as *Linognathus spp, Haematopinus spp, Solenopotes spp, Pediculus humanis;* but also chewing lice (*Mallophaga*) such as *Bovicola (Damalinia) ovis, Bovicola (Damalinia) bovis and other Bovicola spp..* Ectoparasites also include members of the order Acarina, such as mites (e.g. *Chorioptes bovis, Cheyletiella* spp., *Dermanyssus gallinae, Ortnithonyssus spp., Demodex canis, Sarcoptes scabiei, Psoroptes ovis* and *Psorergates spp.* and ticks. Known representatives of ticks are, for example, *Boophilus, Amblyomma, Anocentor, Dermacentor, Haemaphysalis, Hyalomma, Ixodes, Rhipicentor, Margaropus, Rhipicephalus, Argas, Otobius* and *Ornithodoros* and the like, which preferably infest warm-blooded animals including farm animals, such as cattle, horses, pigs, sheep and goats, poultry such as chickens, turkeys, guineafowls and geese, fur-bearing animals such as mink, foxes, chinchillas, rabbits and the like, as well as companion animals such as ferrets, guinea pigs, rats, hamster, cats and dogs, but also humans.

The compositions according to the invention are also active against all or individual development stages of animal pests showing normal sensitivity, as well as those showing resistance to widely used parasiticides. This is especially true for resistant insects and members of the order *Acarina.* The insecticidal, ovicidal and/or acaricidal effect of the active substances of the invention can manifest itself directly, i.e. killing the pests either immediately or after some time has elapsed, for example when moulting occurs, or by destroying their eggs, or indirectly, e.g. reducing the number of eggs laid and/or the hatching rate, good efficacy corresponding to a pesticidal rate (mortality) of at least 50 to 60%.

It is surprising that the combination of the two active ingredients (i) and (ii) according to the invention is successfully controlling the full spectrum of animal ectoparasites including fleas and especially ticks, although the killing activity of spinosyns against, for example, ticks, is weak, and no such killing activity against either fleas or ticks has been reported yet for DHQ compounds and especially not for the compound of formula (I).

The combinations of active ingredients (i) nand (ii) according to the invention can also be used against hygiene pests, especially of the order *Diptera* of the families *Muscidae, Sarcophagidae, Anophilidae* and *Culicidae*; the orders *Orthoptera, Dictyoptera* (e.g. the family *Blattidae* (cockroaches), such as *Blatella germanica, Blatta orientalis, Periplaneta americana)* and *Hymenoptera* (e.g. the families *Formicidae* (ants) and *Vespidae* (wasps).

The combinations of the present invention are also effective against ectoparasites of fishes, especially the sub-class of Copepoda (e.g. order of *Siphonostognatoidae* (sea lice), whilst being well tolerated by fish.

The good pesticidal activity of the combinations according to the invention corresponds to a mortality rate of at least 50-60% of the pests mentioned, more preferably to a mortality rate over 90%, most preferably to 95-100%. The combinations of the compound of formula (I) and a spinosyn are preferably employed internally and externally in unmodified form or preferably together with the adjuvants conventionally used in the art of formulation and may therefore be processed in a known manner to give, for example, liquid formulations (e.g. spot-on, pour-on, spray-on, emulsions, suspensions, solutions, emulsifiable concentrates, solution concentrates), semi-solid formulations (e.g. creams, ointments, pastes, gels, liposomal preparations) and solid preparations (e.g. food additives tablets including e. g. capsules, powders including soluble powders, granules, or embeddings of the active ingredient in polymeric substances, like implants and microparticles). As with the compositions, the methods of application are selected in accordance with the intended objectives and the prevailing circumstances.

The formulations, i.e. preparations containing the active ingredients (i) and (ii) according to the invention, and optionally a solid, semi-solid or liquid adjuvant, are produced in a manner known *per se*, for example by intimately mixing, kneading or dispersing the active ingredients with compositions of excipients, whereby the physiological compatibility of the formulation excipients must be taken into consideration.

The solvents in question may be: alcohols (aliphatic and aromatic), such as benzylalcohol, ethanol, propanol, isopropanol or butanol; fatty alcohols, such as oleyl alcohol and glycols and their ethers and esters, such as glycerin, propylene glycol, solketal, dipropylene glycol ether, ethylene glycol, ethylene glycol monomethyl or -ethyl ether, diethylene glycol monomethyl ether and -monoethyl ether (transcutol), butyl dioxytol and benzyl benzoate; carbonates, such as propylene carbonate; ketones, such as cyclohexanone, isophorone or diacetanol alcohol; and polyethylene glycols, such as PEG 300. In addition, the compositions may comprise strong polar solvents, such as N-methyl-2-pyrrolidone, dimethyl sulfoxide or dimethylformamide, or water, fatty acid esters, such as ethyl oleate or isopropylpalmitate, vegetable oils, such as rape, castor, coconut, or soybean oil, synthetic mono-, di-, triglycerides like e.g. glyceryl monostearate and medium chain triglycerides and also, if appropriate, silicone oils. The mentioned ingredients may also serve as carrier for particulate application froms.

As ointment base resp. structure building ingredients the following excipients may be used: Petroleum based substances, such as Vaseline or paraffines, bases made from wool fat, like e.g. lanolin or lanolin alcohols, polyethylene glycols like e.g. macrogols and lipid bases like e.g. phospholipids or triglycerids, such as hydrogenated vegetable oils.

The use of emulsifiers, wetting agents and spreading agents may also be required, in general, lecithins like soy lecithin, salts of fatty acids with alkaline earth and alkali metals, alkyl sulfates like sodium cetylstearyl sulphate, cholates, fatty alcohols like cetyl alcohol, sterols like cholesterol, polyoxyethylene sorbitan fatty acid esters like polysorbate 20, sorbitan fatty acid esters like sorbitan mono laureate, fatty acid esters and fatty alcohol ethers of polyoxyethylene like poloxyl oleyl ether, polyoxypropylene polyoxyethylene block copolymers as e.g. Pluronic™ , saccharose esters like saccharose distearate, polyglyceryl fatty acid esters like polyglycerol oleate and fatty acid esters like e.g. ethyl oleate or isopropylmyristate.

The formulations may also include gelifying and stiffening agents, like e.g. polyacrylic acid derivatives, cellulose ethers, polyvinyl alcohols, polyvinylpyrrolidons and fine disperse silicium dioxide.

As polymeric agents with controlled release properties, may be applied derivatives made by e.g. polylactic acid, polylactic coglycolic acid, poly orthoester, polyethylene carbonate, poly anhydrids and starch and PVC based matrices.

The addition of penetration enhancers like ketones, sulfoxides, amides, fatty acid esters and fatty alcohols may be necessary.

Also preservatives like sorbic acid, benzyl alcohol and parabenes, and antioxidants as e.g. alpha tocopherol may be added.

The compositions comprising a combination of the active ingredients may also applied in capsules, like hard gelatine capsules or soft capsules.

The binders for tablets and boli may be chemically modified polymeric natural substances that are soluble in water or in alcohol, such as starch, cellulose or protein derivatives (e.g. methyl cellulose, carboxymethyl cellulose, ethylhydroxyethyl cellulose, proteins such as zein, gelatin and the like), as well as synthetic polymers, such as polyvinyl alcohol, polyvinyl pyrrolidone etc. The tablets also contain fillers (e.g. starch, microcrystalline cellulose, sugar, lactose etc.), lubricants (e.g. magnesium stearate), glidants (e.g. colloidal silicon dioxide) and disintegrants (e.g. cellulose derivatives) and acid resistant coatings, like e.g. acrylic acid esters.

As a rule, the insecticidal and acaricidal compositions according to the invention contain 0.1 to 99 % by weight, especially 0.1 to 95 % by weight of active ingredients (i) and (ii), 99.9 to 1 % by weight, especially 99.8 to 5 % by weight of a solid or liquid admixture, including 0 to 25 % by weight, especially 0.1 to 25 % by weight of a surfactant.

Application of the compositions according to the invention to the animals to be treated may take place topically, perorally, parenterally or subcutaneously, the composition being present in the form of solutions, emulsions, suspensions, (drenches), powders, tablets, boli, capsules, collars, ear tags and pour-on formulations.

Preferred topical formulations are understood to refer to a ready-to-use solution in form of a spot-on, pour-on or spray-on formulation often consisting of a dispersion or suspoemulsion or a combination of active ingredient and spreading auxiliaries. The expression spot-on or pour-on method is understood to refer to a ready-to-use concentrate intended to be applied topically and locally on the animal. This sort of formulation is intended to be applied directly to a relatively small area of the animal, preferably on the animal's back and breech or at one or several points along the line of the back and breech. It is applied as a low volume of about 0.05 to 1 ml per kg, preferably about 0.1 ml per kg, with a total volume from 1 to 100 ml per animal, preferably limited to a maximum of about 50 ml. However, it goes without saying that the total volume has to be adapted to the animal that is in need of the treatment and will clearly be different, for example, in young cats and in cattle. These pour-on and spot-on formulations are designed to spread all around the animal giving protection or treatment to almost any part of the animal. Even so the administration is carried out by applying a swab or spray of the pour-on or spot-on formulation to a relatively small area of the coat, one observes that from the active substance is dispersed almost automatically over wide areas of the fur owing to the spreading nature of the components in the formulation and assisted by the animal's movements.

Pour-on or spot-on formulations suitably contain carriers, which promote rapid distribution over the skin surface or in the coat of the host animal, and are generally regarded as spreading oils. Suitable carriers are e.g. oily solutions; alcoholic and isopropanolic solutions such as solutions of 2-octyldodecanol or oleyl alcohol; solutions in esters of monocarboxylic acids, such as benzyl benzoate, isopropyl myristate, isopropyl palmitate, lauric acid oxalate, oleic acid oleyl ester, oleic acid decyl ester, hexyl laurate, oleyl oleate, decyl oleate, capric acid esters of saturated fat alcohols of chain length C₁₂-C₁₈; solutions of esters of dicarboxylic acids, such as dibutyl phthalate, diisopropyl isophthalate, adipic acid diisopropyl ester, di-n-butyl adipate or also solutions of esters of aliphatic acids, e.g. glycols. It may be advantageous for a dispersing agent to be additionally present, such as one known from the pharmaceutical or cosmetic industry. Examples are 2-pyrrolidone, 2-(N-alkyl)pyrrolidone, acetone, polyethylene glycol and the ethers and esters thereof, propylene glycol or synthetic triglycerides.

The oily solutions include e.g. vegetable oils such as olive oil, groundnut oil, sesame oil, pine oil, linseed oil or castor oil. The vegetable oils may also be present in epoxidised form. Paraffins and silicone oils may also be used.

A pour-on or spot-on formulation generally contains 1 to 40 %, preferably 10 to 25% by weight of a combination of the compound of formula (I) and a spinosyn,, 0 to 50 % by weight of dispersing agent and 10 to 99 %, preferably 45 to 90% by weight of solvent.

A preferred spot-on formulation according to the invention comprises the compound of formula (I), spinosad and benzyl benzoate.

The pour-on or spot-on method is especially advantageous for use on herd animals such as cattle, horses, sheep or pigs, in which it is difficult or time-consuming to treat all the animals orally or by injection. Because of its simplicity, this method can of course also be used for all other animals, including individual domestic animals or pets, and is greatly favored by the keepers of the animals, as it can often be carried out without the specialist presence of the veterinarian.

Whereas it is preferred to formulate commercial products as concentrates, the end user will often use dilute formulations. However, this depends on the mode of administration. Orally administered products are most often used in diluted form or as feed additives, whereas commercial pour-on and spot-on formulations are normally ready-to-use concentrates.

Such compositions may also contain further additives, such as stabilizers, anti-foaming agents, viscosity regulators, binding agents or tackifiers, as well as other active ingredients, in order to achieve special effects.

Insecticidal and acaricidal compositions of this type, which are used by the end user, similarly form a constituent of the present invention.

In each of the processes according to the invention for pest control or in each of the pest control compositions according to the invention, the active ingredients (i) and (ii) can be used in all of their steric configurations or in mixtures thereof.

The invention also includes a method for prophylactically protecting animals, especially productive livestock, domestic animals and pets, against parasites which is **characterized in that** the active ingredients (i) and (ii) or the active ingredient formulations prepared therefrom are administered to the animals as an additive to the feed, or to the drinks or also in solid or liquid form, orally, as pour-on or spot-on, by injection or parenterally. The invention also includes the combinations according to the invention for usage in one of the said processes.

The following examples illustrate the invention further, the term active ingredients (i) and (ii) representing a combination of the DHQ compound of formula (I) and a spinosyn, preferably spinosad, in a ratio between 5:2 and 5:4 weight by weight. In particular, preferred formulations are made up as follows (% = percent by weight):

### Formulation examples

| 1. Granulate | a) | b) |
|---|---|---|
| active ingredients (i) and (ii) | 5% | 10 % |
| kaolin | 94 % | - |
| highly dispersed silicic acid | 1% | - |
| attapulgite | - | 90 % |

The active ingredient is dissolved in methylene chloride, sprayed onto the carrier and the solvent subsequently concentrated by evaporation under vacuum. Granulates of this kind can be mixed with the animal feed.

| 2. Granulate | |
|---|---|
| active ingredients (i) and (ii) | 3 % |
| polyethylene glycol (mw 200) | 3 % |
| kaolin | 94% |

| | |
|---|---|
| (mw = molecular weight) | |

The finely ground active ingredient is evenly applied in a mixer to the kaolin which has been moistened with polyethylene glycol. In this way, dust-free coated granules are obtained.

### 3. Tablets or boli

**I**

| | |
|---|---|
| active ingredients (i) and (ii) | 33.00 % |
| methylcellulose | 0.80 % |
| silicic acid, highly dispersed | 0.80 % |
| corn starch | 8.40 % |

**II**

| | |
|---|---|
| lactose, cryst. | 22.50 % |
| corn starch | 17.00 % |
| microcryst. cellulose | 16.50 % |
| magnesium stearate | 1.00 % |

I Methyl cellulose is stirred into water. After the material has swollen, silicic acid is stirred in and the mixture homogeneously suspended. The active ingredient and the corn starch are mixed. The aqueous suspension is worked into this mixture and kneaded to a dough. The resulting mass is granulated through a 12 M sieve and dried.
II All 4 excipients are mixed thoroughly.
III The preliminary mixes obtained according to I and II are mixed and pressed into tablets or boli.

### 4. Injectables

**A. Oily vehicle (slow release)**

| | |
|---|---|
| 1. active ingredients (i) and (ii) | 0.1-1.0 g |
| groundnut oil | ad 100 ml |
| 2. active ingredient | 0.1-1.0 g |
| sesame oil | ad 100 ml |

Preparation: The active ingredient is dissolved in part of the oil whilst stirring and, if required, with gentle heating, then after cooling made up to the desired volume and sterile-filtered through a suitable membrane filter with a pore size of 0.22 µm.

**B Water-miscible solvent (average rate of release)**

| | |
|---|---|
| active ingredients (i) and (ii) | 0.1-1.0 g |
| 4-hydroxymethyl-1,3-dioxolane (glycerol formal) | 40 g |
| 1,2-propanediol | ad 100 ml |
| active ingredient | 0.1-1.0 g |
| glycerol dimethyl ketal | 40 g |
| 1,2-propanediol | ad 100 ml |

Preparation: The active ingredient is dissolved in part of the solvent whilst stirring, made up to the desired volume and sterile-filtered through a suitable membrane filter with a pore size of 0.22 µm.

**C. Aqueous solubilisate (rapid release)**

| | | |
|---|---|---|
| 1. | active ingredients (i) and (ii) | 0,1-1,0 g |
| | polyethoxylated castor oil (40 ethylene oxide units) | 10 g |
| | 1,2-propanediol | 20 g |
| | benzyl alcohol | 1 g |
| | aqua ad inject. | ad 100 ml |
| 2. | active ingredients (i) and (ii) | 0.1-1.0 g |
| | polyethoxylated sorbitan monooleate (20 ethylene oxide units) | 8 g |
| | 4-hydroxymethyl-1,3-dioxolane (glycerol formal) | 20 g |
| | benzyl alcohol | 1 g |
| | aqua ad inject. | ad 100 ml |

Preparation: The active ingredients are dissolved in the solvents and the surfactant, and made up with water to the desired volume. Sterile filtration through an appropriate membrane filter of 0.22 µm pore size.

### 5. Pour on

| A | |
|---|---|
| active ingredients (i) and (ii) | 5 g |
| isopropyl myristate | 10 g |
| isopropanol | ad 100 ml |

| B | |
|---|---|
| active ingredients (i) and (ii) | 2 g |
| hexyl laurate | 5 g |
| medium-chained triglyceride | 15 g |
| ethanol | ad 100 ml |

| C. | |
|---|---|
| active ingredients (i) and (ii) | 2 g |
| oleyl oleate | 5 g |
| N-methyl-pyrrolidone | 40 g |
| isopropanol | ad 100 ml |

### 6. Spot on

| A. | |
|---|---|
| active ingredients (i) and (ii) | 10-35 g |
| transcutol | ad 100 ml |

| B | |
|---|---|
| active ingredients (i) and (ii) | 10-35 g |
| benzyl benzoate | ad 100 ml |

| C | |
|---|---|
| active ingredients (i) and (ii) | 10-35 g |
| benzyl alcohol | 5-35 g |
| solketal | ad 100 ml |

### 7. Spray on

| A. | |
|---|---|
| active ingredients (i) and (ii) | 1 g |
| isopropanol | 40 g |
| propylene carbonate | ad 100 ml |

| B | |
|---|---|
| active ingredients (i) and (ii) | 1 g |
| propylene glycol | 10 g |
| isopropanol | ad 100 ml |

The aqueous systems may also preferably be used for oral and/or intraruminal application.

The compositions may also contain further additives, such as stabilizers, e.g. where appropriate epoxidized vegetable oils (epoxidised coconut oil, rapeseed oil, or soybean oil); antifoams, e.g. silicone oil, preservatives, viscosity regulators, binders, tackifiers, as well as fertilisers or other active ingredients to achieve special effects.

Further biologically active substances or additives, which are neutral towards the compounds of the combinations of the present invention I and do not have a harmful effect on the host animal to be treated, as well as mineral salts or vitamins, may also be added to the described compositions.

If the ectoparasiticidal compositions are present in the form of feed concentrates, then high-performance feed, feed cereals or protein concentrates, for example, are used as carriers.

Such feed concentrates or compositions can, in addition to the active ingredients, also comprise additives, vitamins, antibiotics, chemotherapeutics, or other pesticides, mainly bacteriostats, fungistats, coccidiostats, or also hormone preparations, anabolics or substances which promote growth, influence the quality of meat from animals for slaughter or are useful to the organism in another way. If the compositions or the active ingredients of the formula I present therein are added directly to the feed or to the drinking water for the animals, the finished feed or the finished drinking water comprises the active ingredients preferably in a concentration from approximately 0.0005 to 0.02% by weight (5-200 ppm).

The following examples serve to illustrate the invention. The starting substances used may be produced by methods described in literature or are commercially available.

### Preparation of the compound of formula (I)

The filamentous fungus Penicillium scabrosum (e.g. CBS-305.97) is grown in 500 ml flasks containing 250 ml of a liquid medium consisting of malt extract (20 g/L), Glucose (20 g/L) and Peptone (1 g/L). After 3 days of incubation at 24°C at 150 rpm, these cultures are used to inoculate production flasks containing Rice grains or a liquid medium. The liquid medium consists of Soymeal (20 g/L) and Mannitol (20 g/L) and is adjusted to a pH7 prior to sterilisation. Cultivation is carried out at 24 °C for 10 to 30 days without agitation. The fermentation broth is harvested and subsequently extracted with an organic solvent like Methanol or Ethylacetate. The raw extract is purified via silica gel chromatography using Heptan and Ethylacetate (50:50). Fractions containing the compound of formula (I) are evaporated to dryness and reconstituted in Acetonitril. Final purification is done via chromatography on a C18 reversed phase column using a Water Acetonitril gradient.

### Preparation of a spot-on formulation comprising the compound of formula (I) and spinosad

Solutions for topical application are prepared by dissolving the active ingredients in the pure solvent or in the mixture of solvents with stirring at room temperature.

### Biological Examples (Control of animal parasites)

### Activity against ticks (Rhipicephalus sanguineus) and fleas (Ctenocephalides felis) on dogs

Dogs of the beagle breed are separated into one treatment and one control group (4 dogs per group). On day 0, the dogs are treated with the test formulation by spot-on application (between the shoulder blades). On day +1, the animals are infested with unfed adult ticks and fleas(sex ratio each 1:1). Evaluation of efficacy is performed at 48h, and then weekly 48h after reinfestation with ticks and fleas by counting the numbers of dead and live ticks and fleas found on the animals. Efficacy is expressed as comparison with a placebo treated group using the Abbott's formula. Infestation is repeated at weekly intervals until efficacy drops. The treatment groups are treated with the DHQ of formula (I) and a spinosyn as follows:

| Treatment Group | Amount DHQ of formula (I) | Spinosyn | Amount spinosyn | Vehicle |
|---|---|---|---|---|
| D1 | 25 mg/kg | Spinosad | 20 mg/kg | Benzyl alcohol |
| D2 | 25 mg/kg | Spinosad | 20 mg/kg | Benzyl benzoate |
| D3 | 25 mg/kg | Spinosad | 20 mg/kg | Solketal/Benzyl alcohol |
| D4 | 25 mg/kg | Spinosad | 20 mg/kg | NMP/Benzyl alcohol |

Infestation with ticks and fleas is done up to 6 weeks depending on the activity against ticks and fleas observed in the week before. Activity is determined 48 hours after infestation. The results observed for the different treatment groups are summarized in Table 1.

**Table 1: Percent Activity against Fleas and Ticks on dogs treated with the DHQ of formula (I) and spinosad to untreated control (ND: not done).**

| Group | 1 week | | 2 weeks | | 3 weeks | | 4 weeks | | 5 weeks | | 6 weeks | |
|---|---|---|---|---|---|---|---|---|---|---|---|---|
| | Tick [%] | Flea [%] | Tick [%] | Flea [%] | Tick [%] | Flea [%] | Tick [%] | Flea [%] | Tick [%] | Flea [%] | Tick [%] | Flea [%] |
| D1 | 100 | 100 | 100 | 100 | 90 | 100 | 91 | 100 | 51 | 100 | ND | ND |
| D2 | 98 | 100 | 97 | 100 | 96 | 100 | 97 | 100 | 91 | 100 | 62 | 99 |
| D3 | 99 | 100 | 97 | 100 | 84 | 99 | 67 | 98 | ND | ND | N\D | ND |
| D4 | 98 | 100 | 99 | 100 | 96 | 100 | 81 | 100 | ND | ND | ND | ND |

### Activity against ticks (Ixodes ricinus) and fleas (Ctenocephalides felis) on cats.

Cats are separated into one treatment and one control group (4 cats per group). On day 0, the cats are treated with the test formulation by spot-on application (at the base of the skull). On day +1, the animals are infested with unfed adult ticks and fleas (sex ratio 1:1). Evaluation of efficacy is performed at 48h, and then weekly 48h after reinfestation with ticks and fleas by counting the numbers of dead and live ticks and fleas found on the animals. Efficacy is expressed as comparison with a placebo treated group using the Abbott's formula. Infestation was repeated at weekly intervals until efficacy drops. The treatment groups are treated with DHQ and a spinosyn as outlined in Table 2 below

**Table 2: Treatment groups**

| Treatment Group | Amount DHQ | Spinosyn | Amount Spinosyn | Vehicle |
|---|---|---|---|---|
| C1 | 32 mg/kg | Spinosad | 22 mg/kg | Benzyl alcohol / Ethyl lactate |
| C2 | 32 mg/kg | Spinosad | 23 mg/kg | Benzyl alcohol/NMP |

Infestation with ticks and fleas was done up to 4 weeks depending on the activity against ticks and fleas observed in the week before. Activity was determined 48 hours after infestation. Ticks and fleas are controlled effectively in both treatment groups C1 and C2 for 2-4 weeks.

## Claims

1. A composition for controlling ectoparasites in and on animals, which comprises a combination of
(i) the dihydroquinolinone (DHQ) compound of formula 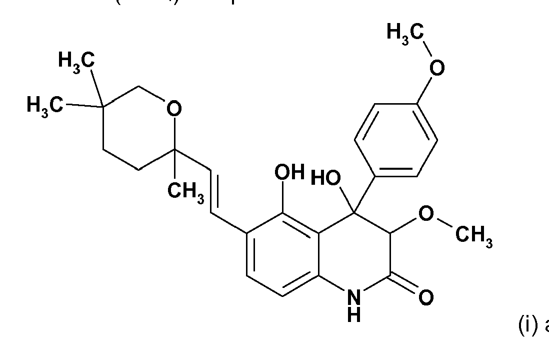 and
(ii) a spinosyn.

2. A composition according to claim 1, wherein the spinosyn (ii) is a mixture of spinosyn A and spinosyn D, in particular spinosad.

3. A composition according to claim 1 or 2, comprising the compound of the formula (I) and the spinosyn in a ratio between 10:1 and 1:10 weight by weight, and preferably in a ratio between 5:2 and 5:4 weight by weight.

4. A composition according to any one of claims 1 to 3, which is a spot-on formulation.

5. Method of controlling parasites in and on warm-blooded animals, which comprises applying to the animals a pharmaceutical effective amount of a composition of any one of claims 1 to 4.

6. Use of a composition according to of any one of claims 1 to 4 in the control of parasites.

7. Use of a composition of any one of claims 1 to 4 in a process for controlling parasites in and on warm-blooded animals.

8. Use of a composition of any one of claims 1 to 4 in the preparation of a pharmaceutical composition against parasites in and on warm-blooded animals.
